# EUROPEAN PATENT SPECIFICATION

(11) **EP 0 594 524 B1**
(45) Date of publication and mention of the grant of the patent: **09.04.1997**
(21) Application number: 93500143.8
(22) Date of filing: 18.10.1993
(51) Int. Cl.: B60J 3/02

(54) **Support for automobile sun visors**
Träger für Kraftfahrzeugsonnenblende
Support pour pare-soleil d'automobile

(30) Priority: 19.10.1992 ES 9202072
(43) Date of publication of application: 27.04.1994
(73) Proprietor: FICO I.T.M., S.A., E-08027 Barcelona (ES)
(72) Inventor: Aymerich Munoz, José, ES-08191 Rubi (ES)
(74) Representative: SUGRANES - VERDONCES - FERREGÜELA

(56) References cited:
- EP-A- 0 346 155
- EP-A- 0 348 277
- EP-A- 0 413 584
- US-A- 5 031 954

## Description

### Field of the Invention

The object of the present invention is a support for automobile sun visors which is particularly applicable to automobiles having a second roof superimposed over the vehicle structure in the passenger compartment.

### Background of the Invention

It is widely known that the sun visors normally fitted as original equipment to automobiles are attached to the vehicle structure by corresponding fixing devices allowing the user to locate said visors in any position among the regular positions of use. Said fixing devices are also known to be comprised, in general, of a support (also called base body) which is fixed to the vehicle structure and by a bent pivot pin, one of the arms of which is engageable with the said support in such a way that it may be rotated about it and the sun visor is engageable with the other arm in such a way that it may be rotated about it, thereby achieving that the sun visor may be rotated by the user about two axes, as is normal.

Where the vehicle passenger compartment comprises a second roof superimposed over the inner surface of the main roof of the vehicle structure, the sun visor fixing device support is mounted so that, in turn, it is superimposed on said second roof, the support of the device being generally attached to the mechanical members provided for the purpose in the vehicle structure by nuts and bolts passing through said second roof. Hereinafter the said second roof will be called "inner roof".

As a known embodiment of such fixing devices, there may be cited Spanish patent P 9000507 published on October 16^{th}, 1991 under ES-A-2 021 198 which discloses a device composed by a support (or base body) and by a bent pivot pin, which are mutually engageable by respective connecting means.

From the foregoing, it will be gathered that, on the vehicle assembly line, the assembly of the two sun visors normally included in the vehicle, through the inner roof, requires, in the first place, the availability of adequate means for the storage of each of the two sun visor models which are needed, since, as is known, the driver's side sun visor and the passenger's side sun visor, as well as their respective fixing devices, are different from each other on being symmetrical one relative to the other. And it also requires, in the second place, the assembly of the sun visor supports to the inner roof as a prior operation to its attachment with nuts and bolts to the said mechanical members belonging to the main roof formed by the vehicle structure. The fact that storage means are required for each of the two sun visor models that each vehicle needs notably increases the cost of assembling sun visors.

From US-A-5,031,954 a device for a sunvisor is known which can be preassembled to the inner roof. However, the bracket arm or pivot pin has to be engaged with the support, as the support is attached to the vehicle roof by rotation of the bracket arm. Furthermore, the device disclosed in this embodiment of the prior art contains multiple elements.

### Summary of the Invention

To provide a solution to the above problem greatly reducing the cost of assembly of the sun visors in automobiles on the vehicle assembly line, there is disclosed an automobile sun visor support of new structure.

It will be understood that in each specific application of the invention, the fixing device may be of known design or any new one, since the invention relates strictly to the support (also called base body) of said fixing devices. I.e., the support of the invention is a constituent member of the fixing device for automobile sun visors.

The support of the invention is preferably made from injected plastics material of appropriate mechanical strength. This support comprises an assembly base and a guide extension arranged on the side of the base facing the inner roof of the vehicle passenger compartment, or rear side. The assembly base is provided with a contour and surface finish in keeping with the passenger compartment finish and comprises anchoring means allowing it to be attached to the vehicle structure through the inner roof superimposed on said structure. The support guide extension is preferably essentially frustoconical in shape and is longitudinally traversed by a through hole. The guide extension generally occupies a centered position relative to the assembly base and is slightly angled relative to said base. The free end of the guide extension, which is of smaller diameter, is provided with retaining means which, once the corresponding arm of the pivot pin of a sun visor fixing device has been engaged with said guide extension, allows the pin to pivot freely about the support and prevents it coming loose therefrom under normal conditions of use. Such a support, as defined in the precharacterising portion of claim 1, is of the type disclosed in US-A-5,031,954.

The support of the invention is characterized in that the support is a one-piece member and in that on the rear side of the assembly base thereof which, as said above, is the side facing the vehicle inner roof, there are outwardly projecting positioning ribs which, in correspondence with a through hole provided for that purpose in the inner roof, allow the support connected with its corresponding sun visor to be attached to said inner roof in the operative position thereof, i.e., in the position that the support should occupy relative to the main roof formed by the vehicle structure, and there are also provided on said rear side retaining means different from the anchoring means which, in correspondence with said through hole, allows free attachment of the support connected to its corresponding sun visor to the vehicle inner roof, without the need of any tool or the engagement of the pivot pin with the guide extension, said positioning ribs and retaining means allowing the support connected with its corresponding sun visor to be engaged with and attached to the inner roof during the manufacturing process of the latter.

In this way, the features of the support of the invention described in the foregoing paragraph provide an economical solution to the problem raised by the assembly in the automobile of the two sun visors it normally carries. In fact, up to date, as described above, the inner roof was assembled in the vehicle and, in a subsequent operative stage, the sun visors were mounted. With the support of the invention, these assembly operations are simplified since said support allows both sun visors to be attached to the inner roof at origin, i.e. by means of the support of the invention, both sun visors may be fitted to the inner roof, for example, at the site where this is manufactured. In this way, on the assembly line, the mounting of the inner roof implies mounting of the two sun visors, i.e. the mounting of said inner roof causes the supports of the invention of both sun visors to be correctly positioned relative to the pertinent mechanical members of the vehicle structure to which they are to be attached, without any workman having to intervene.

In a first embodiment of the invention, the retaining means comprises two identical gripping projections orthogonally arranged on opposite ends of the rear side thereof at a relatively short distance from the edge thereof. The said gripping projections are provided coextensive with the outer side thereof with respective transverse channels which, extending from flush with said rear side, have a width and depth depending on the thickness of said inner roof, so that, once the support is attached to the inner roof, the corresponding portions of the edge of the pertinent hole formed in said inner roof are snugly housed in the channels, preventing inopportune release of the support.

According to a further embodiment of the invention, in the through hole formed in the vehicle inner root is characterized in that the spacing between the support retaining edges is essentially equal to the distance between the bottoms of the channels of the support gripping projections.

According to a second embodiment of the invention, the retaining means comprises, at one of the ends of said rear side, two identical mutually facing resilient strips perpendicular to said side. Said strips are provided at the upper end thereof with respective gripping crimps directed towards the edge of the assembly base and, centered relative to said rear side, a bent gripping extension formed by a plurality of internally connected ribs, the respective free end of which is directed towards the end opposite the one occupied by said resilient strips projecting out over a relatively short distance from the edge of the assembly base, said resilient strips and bent extension being dimensioned in such a way that, once the support is attached to the inner roof, the corresponding portions of the edge of the pertinent hole formed in said inner roof are retained between the rear side of the assembly base and the edges of said strips and between said rear side and the free end of the bent extension, preventing inopportune release of the support.

According to a further embodiment of the invention, in the through hole located in the vehicle inner roof the spacing between the support retaining edges is essentially equal to the distance between the lower ends of the resilient strips and the inner side of the support bent extension.

According to a third embodiment of the invention, the retaining means comprises two mutually identical resilient strips perpendicular to said rear side. These strips are arranged on a respective plane tangentially adjacent to the base of the guide extension of the support at a short distance therefrom and separating them. The resilient strips are provided at their upper end with respective gripping crimps directed towards the edge of the assembly base so that once the support is attached to the inner roof, the corresponding portions of the pertinent hole formed in the said inner roof are retained between the rear side of the assembly base and the edges of said strips, preventing inopportune release of the support.

According to a further embodiment of the invention, in the through hole located in the vehicle inner roof, the spacing between the support retaining edges is essentially equal to the distance between the lower ends of the support resilient strips.

According to a fourth embodiment of the invention, the retaining means comprises a curved partition-like shoulder extending perpendicularly to said rear side and which is arranged in the centre partly surrounding the support guide extension. The curved shoulder is extended at the centre portion of the upper end thereof in a fairly large gripping projection, the free end of which is directed towards the corresponding edge of the assembly base so that, once the support is attached to the inner roof, the corresponding portion of the edge of the pertinent hole formed in said inner roof is retained between the rear side of the assembly base and the gripping projection, preventing inopportune release of the support.

According to a further embodiment of the invention, the through hole located in the vehicle inner roof has a contour which is essentially the same as that of the support curved shoulder and it is provided with a notch mating with the gripping projection of said curved shoulder arid a positioning shoulder mating with the positioning ribs of the assembly base.

### Brief Description of the Drawings

The support for automobile sun visors of the invention is illustrated in the sheets of drawings accompanying the present description. In the drawings:
Figure 1 is a front view of the support of the invention showing a first embodiment of the retaining means thereof.
Figure 2 is a side view of the support shown in Figure 1.
Figure 3 is a cross-section view on the line III-III of Figure 1 showing the support of the invention attached to the inner roof of an automobile.

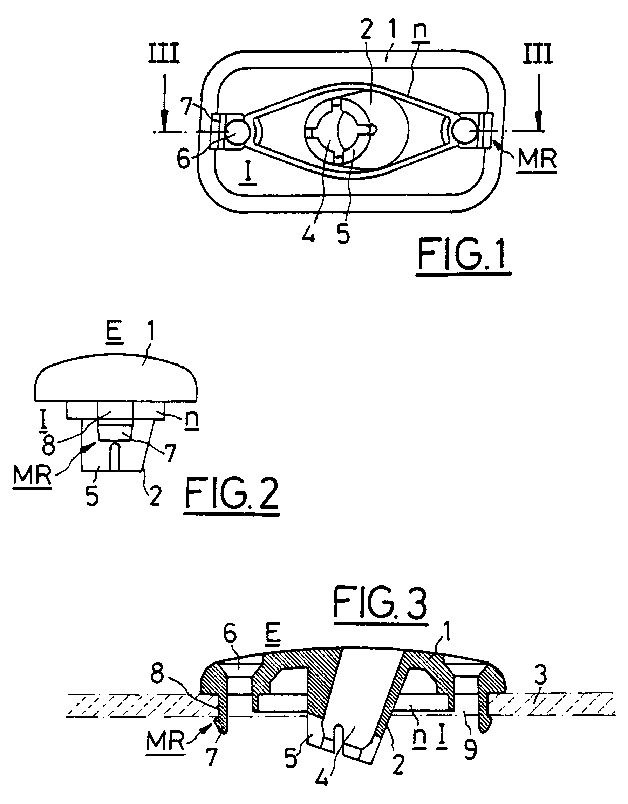

Figure 2 is a front view of the support of the invention showing a second embodiment of the retaining means thereof.

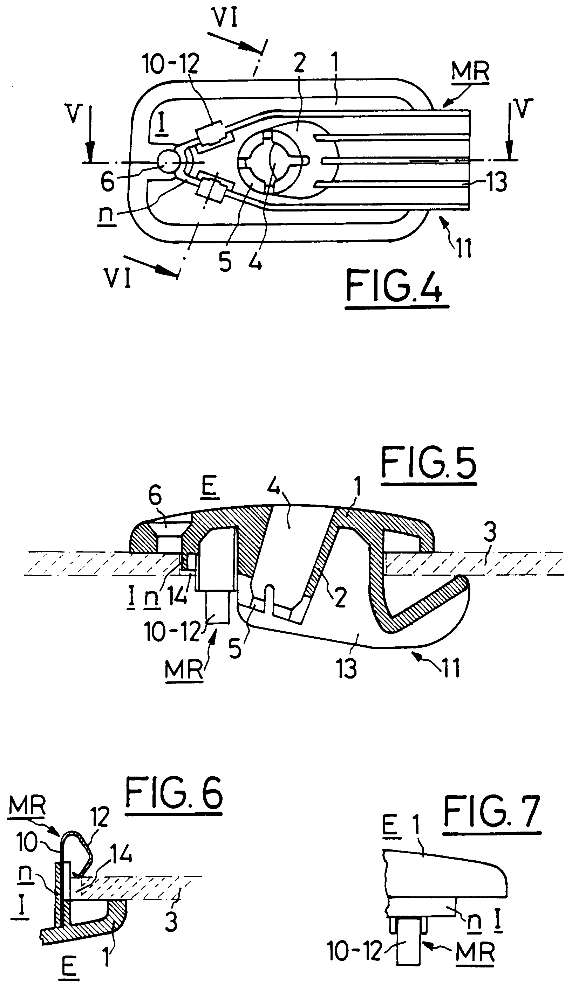

Figure 5 is a cross-section view on the line V-V of Figure 4 showing the support of the invention attached to the inner roof of an automobile.
Figure 6 is a part cross-section view on the line VI-VI of Figure 4.
Figure 7 is a part side view of the support shown in Figure 4.

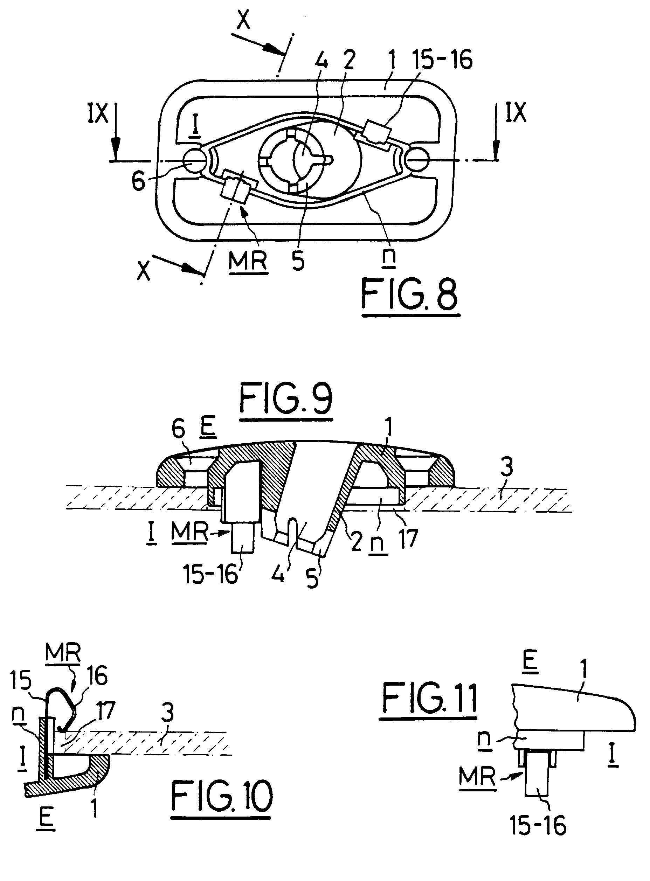

Figure 8 is a front view of the support of the invention showing a third embodiment of the retaining means thereof.
Figure 9 is a cross-section view on the line IX-IX of Figure 8 showing the support of the invention attached to the inner roof of an automobile.

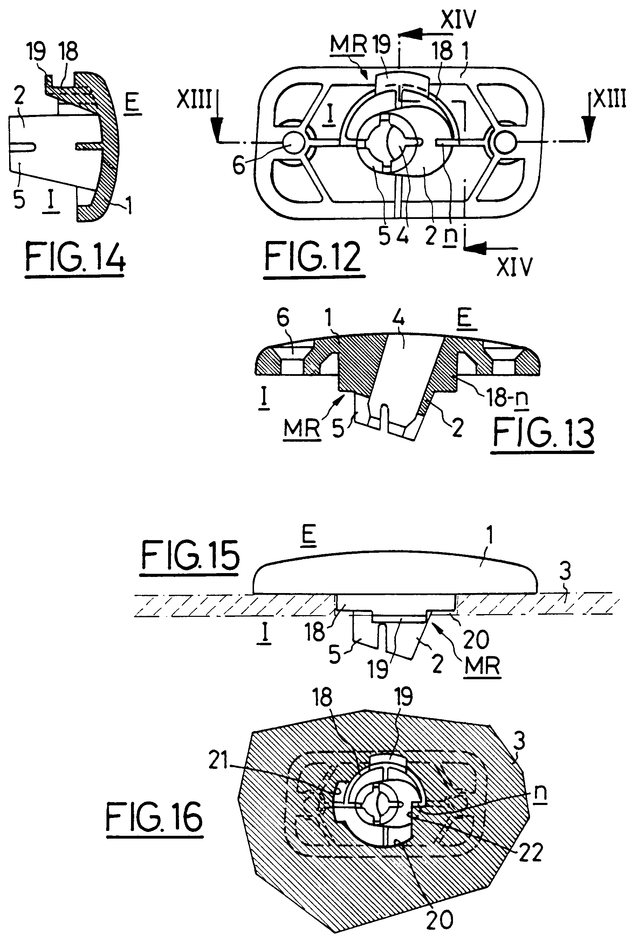

Figure 10 is a part cross-section view on the line X-X of Figure 8.
Figure 11 is a part side view of the support shown in Figure 8.
Figure 12 is a front view of the support of the invention showing a fourth embodiment of the retaining means thereof.
Figure 13 is a cross-section view on the line XIII-XIII of Figure 12.
Figure 14 is a cross-section view on the line XIV-XIV of Figure 12.
Figures 15 and 16 are respective side and front views of the support of the invention shown in Figure 12, attached to the inner roof of an automobile.

### Detailed Description of the Embodiment

In the following description of the support for automobile sun visors of the invention, there are disclosed four different modes of the retaining means characterizing it. Said modes of the retaining means are shown in the drawing in the following order: a first mode in Figures 1 to 3; a second mode in Figures 4 to 7; a third mode in Figures 8 to 11; and a fourth mode in Figures 12 to 16, as stated before. For greater clarity of disclosure, all those members which are common to the support of the invention have the same reference symbols. Also, for the same purposes, neither the aforementioned bent pivot pin, functionally associated with the support of the invention, nor the sun visor engageable with the said bent pivot pin have been shown in the drawing. For the same reason, the inner roof superimposed on the inner surface of the main roof formed by the vehicle structure has been shown only in part and only in those figures requiring it for a greater ease of understanding of the mode of engagement of the support of the invention to said inner roof. Also for greater clarity of the drawing, neither the main vehicle roof nor the mechanical members (such as nuts and bolts or rivets, for example) holding the support to said main vehicle roof have been shown.

The support of the invention is a one-piece member and is made preferably from plastics material of appropriate mechanical strength. As shown in the drawing, there are to be seen in the support of the invention the assembly base 1, the guide extension 2, the positioning ribs n and the retaining means MR.

In this embodiment of the support of the invention, the assembly base 1 has an essentially rectangular form and, of both larger sides, the outer side E is provided with a curved surface shown in section in Figures 3, 5, 9 and 13 and the rear side I shown in Figures 1, 4, 8 and 12, is the one facing the vehicle inner roof 3 as shown in Figures 3, 5, 9 and 15, respectively.

Figures 1, 3, 4, 5, 8, 9, 12 and 13 show how the guide extension 2 is essentially frustoconical in shape and extends at a certain angle from the centre of the rear side I of the assembly base 1. The guide extension 2 is provided with the through hole 4 dimensioned snugly to receive the corresponding arm of the bent pivot pin (not shown) and at the free end thereof there are the shoulders 5, the purpose of which is to prevent the bent pivot pin from sliding longitudinally and breaking away from the support once engaged therewith.

Both the assembly base 1 and the guide extension 2 of the support of the invention shown in the drawing are given only as a non-limiting example, since they may take on any other shape appropriate for each particular application, without this affecting the essence of the invention.

For attaching the support of the invention to the automobile structure, by nuts and bolts (not shown), the assembly base 1 is provided with two through holes 6 arranged at both longitudinal ends, as shown in Figures 1 and 3, Figures 8 and 9 and Figures 12 and 13 for the first, third and fourth modes of embodiment, respectively, of the retaining means MR and said assembly base 1 has a single through hole 6 in one longitudinal end thereof for the second mode of embodiment of the retaining means MR, as shown in Figures 4 and 5.

The above described form of support of the invention is known and widely used in the known embodiments of fixing means for automobile sun visors.

The purpose of the different positioning ribs n arranged on the rear side I of the assembly base 1 of the support of the invention, shown in the drawing, is to engage said support with the inner roof 3 in the operative position thereof, namely, as said above, in the position that the support should occupy relative to the vehicle main roof.

According to the first mode of the retaining means MR of the support of the invention shown in Figures 1 to 3, said means MR is arranged on the rear side I of the assembly base 1 and comprises the two gripping projections 7 which, as shown in Figures 1 to 3, are identical and are perpendicular to said rear side I. The gripping projections 7 are situated on the main longitudinal centre line of the assembly base 1, at a relatively short distance from the ends thereof and are essentially prismatic in shape, the outer surface thereof having a respective transverse channel 8, extending from flush with said rear side I of the assembly base 1 over a distance equal to the thickness of the vehicle inner roof 3.

The support of the invention provided with the retaining means MR described in the foregoing paragraph is attachable to the vehicle inner roof 3 through the pertinent hole 9 formed in the latter, as shown in Figure 3. The hole 9 is dimensioned depending on the distance between the bottoms of the channels 8 of the gripping projections 7 of the assembly base 1 and depending on the positioning ribs n, so that, once the support is engaged in the inner roof 3, said assembly base 1 totally covers it. No tool is required to engage the support of the invention with the inner roof 3, since said engagement consists simply of pushing the gripping projections 7 into said hole 9 so that, as shown in Figure 3, the corresponding portions of the edge of the hole 9 are retained in the channels 8 of the gripping projections 7, preventing inopportune release of the support of the invention from the vehicle inner roof 3.

According to the second mode of embodiment of the retaining means MR, shown in Figures 4 to 7, of the support of the invention, said means MR comprises two resilient strips 10 and the bent gripping extension 11 arranged on the rear side I of the assembly base 1. Both strips 10 are identical to one another and are arranged opposite each other at a certain angle in one of the ends of the assembly base 1 at a relatively short distance from the edge thereof, as shown in Figure 4. Both strips 10, the respective lower end of which is anchored in the positioning ribs n, are perpendicular to said rear side I and the upper end thereof is provided with a gripping crimp 12 of approximately 180°, directed towards the edge of the assembly base 1 and which projects out in the centre in an appropriate amount in the same direction, as shown in detail in Figure 6. The bent gripping extension 11 is arranged in the centre of said rear side I and is constituted by a plurality of partition-like ribs 13 connected internally and directed, longitudinally, towards the end of the assembly base 1 which is opposite the one occupied by the strips 10 and from which they extend in a relatively short distance. The two resilient strips and the bent extension 11 are dimensioned so that the distance from the flush surface of said rear side I and the ends of the gripping crimps 12 and the distance from said flush surface and the free end of the bent extension 11 is the same as the thickness of the vehicle inner roof 3.

The support of the invention provided with the retaining means MR described in the foregoing paragraph is engageable with the vehicle inner roof 3 through the pertinent hole 14 as shown in Figure 5. The hole 14 is dimensioned depending on the distance between the lower ends of the two resilient strips 10 and the inner side of the bent gripping extension 11 and depending on the positioning ribs n, so that when the support of the invention is engaged in the inner roof 3, the assembly base 1 thereof totally covers it. No tool is required to engage the support of the invention with the inner roof 3, since said engagement consists simply of performing the following operations. In the first place, the free end of the bent extension 11 is inserted in the hole 14 of the inner roof 3. Secondly, both resilient strips 10 are pressed into said hole 14 so that, as shown in Figure 5, the corresponding portions of the edge of the hole 14 are retained between the rear side I of the assembly base 1 and the gripping crimps 12 of the resilient strips 10 and between said rear side I and the free end of the bent extension 11, thereby preventing inopportune release of the support of the invention from the vehicle inner roof 3.

According to the third mode embodiment of the retaining means MR of the support of the invention, shown in Figures 8 to 11, said retaining means MR comprises the two resilient strips 15, the respective lower end of which is anchored to a corresponding positioning rib n and the respective upper end of which is provided with the gripping crimp 16, of approximately 180°, directed towards the edge of the assembly base 1 and which projects out in the centre in an appropriate amount in the same direction, as shown in detail in Figure 10. Figures 8 and 9 show how both resilient strips 15 are identical to each other and are arranged perpendicularly relative to the rear side I and on a respective transverse plane tangentially adjacent to the base of said guide extension 2 separating them, relative to the guide extension 2. Both resilient strips 15 are dimensioned so that the distance from the flush edge of the rear side I and the ends of the gripping crimps 16 thereof is the same as the thickness of the vehicle inner roof 3, as shown in Figures 9 and 10.

The support of the invention provided with the retaining means MR described in the foregoing paragraph is engageable with the vehicle inner roof 3 through the pertinent hole 17 as shown in Figure 9. The hole 17 is dimensioned depending on the distance between the lower ends of the two resilient strips 15 and depending on the positioning ribs n, so that when the support of the invention is engaged in the inner roof 3, the assembly base 1 thereof totally covers it. No tool is required to engage the support of the invention with the inner roof 3, since said engagement consists simply of pressing the resilient strips 15 into said hole 17 so that, as shown in Figure 5, the corresponding portions of the edge of the hole 17 are retained between the rear side I of the assembly base 1 and the gripping crimps 16 of the resilient strips 15, thereby preventing inopportune release of the support of the invention from the vehicle inner roof 3.

According to the fourth mode of embodiment of the retaining means MR of the support of the invention, shown in Figures 12 to 16, said means MR comprises the partition-like curved shoulder 18 extending perpendicularly from the rear side I of the assembly base 1. This curved shoulder 18 is located centrally relative to the assembly base 1 and partially coaxially surrounds, over about 180°, the guide extension 2. Figures 12 and 14 show in detail how the upper end of the curved should 18 is provided at the centre thereof with the gripping projection 19 which is fairly large and the free end of which is directed perpendicularly towards therefrom the edge of the assembly base 1. The curved shoulder 18 and the gripping projection 19 are dimensioned so that the distance between the flush edge of the rear side I of the assembly base 1 and the gripping projection 19 is the same as the thickness of the vehicle inner roof 3.

The support of the invention provided with the retaining means MR described in the foregoing paragraph is engageable with the vehicle inner roof 3 through the pertinent hole 20 as shown in Figures 15 and 16. The hole 20 has a contour which is essentially the same as the contour of the curved shoulder 18 of the support, there being appreciated in said contour of the hole 20 the notch 21 mating with the gripping projection 19 and the positioning shoulder 22 mating with the positioning ribs n. The dimensions of the hole 20 allow the assembly base 1 of the support to cover it completely once the latter is engaged with the inner roof 3. No tool is required for such engagement and it consists simply of performing the following operations. In the first place, the curved shoulder 18 and the gripping projection 19 are inserted in the hole 20 of the inner roof 3, with the notch 21 acting as a guideway. Secondly, the support of the invention is rotated approximately 90° in the appropriate direction until the positioning rib n abuts the positioning shoulder 20, acting as a stop member. In this way, as shown in Figure 16, the corresponding portion of the edge of the hole 20 of the inner roof 3 is retained between the rear side I of the assembly base 1 and the gripping projection 19 of the support of the invention, thereby preventing inopportune release from the vehicle inner roof 3.

The support of the invention, disclosed as an example of embodiment, provided with any of the described embodiments of the retaining means MR allows it to be mounted, attached to the corresponding sun visor, to the vehicle inner roof 3 at origin, i.e. during the manufacture of said inner roof 3. In this way, there are avoided, as stated above, the problems arising from the storage and assembly, on the automobile assembly line, of both sun visors normally fitted to the vehicle. In fact, once the inner roof 3 is mounted in the vehicle on the assembly line, the supports of the invention are suitably arranged in their respective operative position, without it being necessary to perform any pertinent operation. As from this time, the supports may be fixed, for example with nuts and bolts, to the pertinent mechanical members provided on the vehicle structure. It will be understood that, if necessary, the sun visor may be removed from its situation in the automobile by simply performing the following operations. In the first place, the support of the invention is released from its anchorage to the vehicle main roof. Secondly, the support may be pulled out of or removed by rotation from the through hole formed in the inner roof 3, depending on the mode of embodiment of the retaining means MR.

## Claims

1. A support for automobile sun visors, which is preferably made from plastics material, comprising an assembly base (1) and a guide extension (2) arranged on the side (I) of the base (1) facing the vehicle inner roof (3), or rear side, in which:
- the assembly base (1) is provided with a contour and surface finish in keeping with the passenger compartment finish and comprises anchoring means (6) allowing it to be attached to the vehicle structure through the inner roof (3) superimposed on the latter; and
- the support guide extension (2) is preferably essentially frustoconical in shape and is longitudinally traversed by a through hole (4), said guide extension (2) generally occupying a centered position relative to the assembly base (1) and being slightly angled relative to a line perpendicular to said base (1), the free end of the guide extension (2), which is of smaller diameter, being provided with retaining means (5) for the bent pivot pin of a sun visor fixing device;
which is characterized in that:
- the support is a one-piece member,
- on the rear side (I) of the assembly base (1) there are outwardly projecting positioning ribs (n) which, in correspondence with a through hole (9, 14, 17, 20) provided for that purpose in the inner roof (3), allow the support connected with its corresponding sun visor to be attached to said inner roof (3) in the operative position thereof, i.e., in the position that the support should occupy relative to the main roof formed by the vehicle structure, and there are also provided on said rear side (I) retaining means (MR) different from the anchoring means (6) which, in correspondence with said through hole (9, 14, 17, 20), allows free attachment of the support connected to its corresponding sun visor to the vehicle inner roof (3), without the need of any tool or the engagement of the pivot pin with the guide extension (2), said positioning ribs (n) and retaining means (MR) allowing the support connected with its corresponding sun visor to be engaged with and attached to the inner roof (3) during the manufacturing process of the latter.

2. The support of claim 1, characterized in that the retaining means (MR) comprises two identical gripping projections (7) perpendicularly arranged on opposite ends of said rear side (I) at a relatively short distance from the edge thereof, said gripping projections (7) being provided coextensive with the outer side thereof with respective transverse channels (8) which, extending from flush with said rear side (I), have a width and depth depending on the thickness of said inner roof (3), so that, once the support is attached to said inner roof (3), the corresponding portions of the edge of the pertinent hole (9) formed in said inner roof (3) are snugly housed in said the channels (8), preventing inopportune release of the support.

3. The support of claims 1 and 2, characterized in that in the through hole (9) formed in the vehicle inner roof (3) the spacing between the support retaining edges is essentially equal to the distance between the bottoms of the channels (8) of the support gripping projections (7).

4. The support of claim 1, characterized in that the retaining means (MR) comprises, at one of the ends of said rear side (I), two identical mutually facing resilient strips (10) perpendicular to said side (I), said strips being provided at the upper end thereof with respective gripping crimps (12) directed towards the edge of the assembly base (1) and, centered relative to said rear side (I), a bent gripping extension (11) formed by a plurality of internally connected ribs (13), the respective free end of which is directed towards the end opposite the one occupied by said resilient strips (10) projecting out over a relatively short distance from the edge of the assembly base (1), said resilient strips (10) and bent extension (11) being dimensioned in such a way that, once the support is attached to the inner roof (3), the corresponding portions of the edge of the pertinent hole (14) formed in said inner roof (3) are retained between the rear side (I) of the assembly base (1) and the edges (12) of said strips (10), and between said rear side (I) and the free end of the bent extension (11), preventing inopportune release of the support.

5. The support of claims 1 and 4, characterized in that in the through hole (14) located in the vehicle inner roof (3) the spacing between the support retaining edges is essentially equal to the distance between the lower ends of the resilient strips (10) and the inner side of the support bent extension (11).

6. The support of claim 1, characterized in that the retaining means (MR) comprises two mutually identical resilient strips (15) perpendicular to said rear side (I), said strips (15) being arranged on a respective plane tangentially adjacent the base of the guide extension (2) at a short distance therefrom and separating them, the resilient strips (15) being provided at their upper end with respective gripping crimps (16) directed towards the edge of the assembly base (1) so that once the support is attached to the vehicle inner roof (3), the corresponding portions of the pertinent hole (17) formed in the said inner roof (3) are retained between the rear side (I) of the assembly base (1) and the edges (16) of said strips (15)), preventing inopportune release of the support.

7. The support of claims 1 and 6, characterized in that in the through hole (17) located in the vehicle inner roof (3), the spacing between the support retaining edges is essentially equal to the distance between the lower ends of the support resilient strips (15).

8. The support of claim 1, characterized in that the retaining means (MR) comprises a curved partition-like shoulder (18) extending perpendicularly to said rear side (I) and which is arranged in the centre partly surrounding the support guide extension (2), said curved shoulder (18) extending at the centre portion of the upper end thereof in a fairly large gripping projection (19), the free end of which is directed towards the corresponding edge of the assembly base (1) so that, once the support is attached to the vehicle inner roof (3), the corresponding portion of the edge of the pertinent hole (20) formed in said inner roof (3) is retained between the rear side (I) of the assembly base (1) and the gripping projection (19), preventing inopportune release of the support.

9. The support of claims 1 and 8, characterized in that the through hole (20) located in the vehicle inner roof (3) has a contour which is essentially the same as that of the support curved shoulder (18) and in that it is provided with a notch (21) dimensioned to mate with the gripping projection (19) of said curved shoulder (18) and a positioning shoulder (22) mating with the positioning ribs (n) of the assembly base (1).

## Patentansprüche

1. Träger für Kraftfahrzeugsonnenblenden, die vorzugsweise aus Kunststoffmaterial hergestellt sind, mit einer Montagebasis (1) und einer Führungsverlängerung (2), die auf der Seite (I) der Basis (1), die dem inneren Dach (3) des Fahrzeugs zugewandt ist, oder der Rückseite angeordnet ist, wobei:
- die Montagebasis (1) mit einer Kontur und einer Oberfläche versehen ist, die zu der Oberfläche des Fahrgastraums paßt, und Verankerungseinrichtungen (6) umfaßt, durch die sie an der Fahrzeugstruktur durch das Innendach bzw. inneren Dach (3) befestigt werden kann, das über der letzteren liegt; und
- die Trägerführungsverlängerung (2) vorzugsweise im wesentlichen von kegelstumpfartiger Form ist und in Längsrichtung ein Durchgangsloch (4) durch sie hindurchgeht, wobei die Führungsverlängerung (2) im allgemeinen eine Mittelstellung relativ zur Montagebasis (1) einnimmt und relativ zu einer Linie senkrecht zur Basis (1) leicht abgewinkelt ist, und wobei das freie Ende der Führungsverlängerung (2), welches einen geringeren Durchmesser aufweist, mit Rückhalteeinrichtungen (5) für den gebogenen Gelenkzapfen einer Sonnenblendenbefestigungsvorrichtung versehen ist;
welcher dadurch gekennzeichnet ist, daß:
- der Träger ein einteiliges Bauteil ist,
- auf der Rückseite (I) der Montagebasis (1) Positionierungsrippen (n) nach außen hervorstehen, welche, zugeordnet zu einem Durchgangsloch (9, 14, 17, 20), das zu diesem Zweck im Innendach (3) vorgesehen ist, dem Träger, der mit seiner entsprechenden Sonnenblende verbunden ist, gestatten, am Innendach (3) in seiner Funktionsstellung befestigt zu werden, d.h., in der Stellung, die der Träger relativ zum durch die Fahrzeugstruktur ausgebildeten Hauptdach einnehmen sollte, und daß ebenfalls auf der Rückseite (I) Rückhalteeinrichtungen (MR), die nicht die Verankerungseinrichtungen (6) sind, vorgesehen sind, welche, in Zuordnung zum Durchgangsloch (9, 14, 17, 20), die freie Befestigung des mit seiner entsprechenden Sonnenblende verbundenen Trägers am Fahrzeuginnendach (3) ohne Zuhilfenahme jedweden Werkzeugs, oder den Eingriff des Gelenkzapfens mit der Führungsverlängerung (2) gestatten, wobei die Positionierungsrippen (n) und die Rückhalteeinrichtungen (MR) es dem mit seiner entsprechenden Sonnenblende verbundenen Träger gestatten, mit dem Innendach (3) während dessen Herstellungsprozeß in Eingriff zu kommen und an ihm befestigt zu werden.

2. Träger nach Anspruch 1, dadurch gekennzeichnet, daß die Rückhalteeinrichtung (MR) zwei identische Greifvorsprünge (7) aufweist, die rechtwinklig an gegenüberliegenden Enden der Rückseite (I) mit relativ kurzem Abstand von deren Kante angeordnet sind, wobei die Greifvorsprünge (7) an ihrer Außenseite in gleicher Länge mit jeweiligen Querkanälen (8) versehen sind, welche, während sie sich bündig von der Rückseite (I) erstrecken, eine Breite und eine Tiefe aufweisen, die von der Dicke des Innendachs (3) abhängt, so daß, wenn der Träger einmal an dem Innendach (3) befestigt ist, die entsprechenden Abschnitte der Kante des im Innendach (3) ausgebildeten passenden Loches (9) enganliegend in den Kanälen (8) untergebracht werden, wodurch ein unsachgemäßes Lösen des Trägers verhindert wird.

3. Träger nach den Ansprüchen 1 und 2, dadurch gekennzeichnet, daß im Durchgangsloch (9), das im Fahrzeuginnendach (3) ausgebildet ist, der Abstand zwischen den Trägerrückhaltekanten im wesentlichen dem Abstand zwischen den Böden der Kanäle (8) der Trägergreifvorsprünge (7) gleicht.

4. Träger nach Anspruch 1, dadurch gekennzeichnet, daß die Rückhalteeinrichtung (MR) an einem der Enden der Rückseite (I) rechtwinklig zur Seite (I) zwei identische einander zugewandte elastische Streifen (10) aufweist, wobei die Streifen an ihrem oberen Ende mit entsprechenden Greifschlaufen (12), die zur Kante der Montagebasis (1) hin gerichtet sind, und relativ zur Rückseite (I) mittig gelegen, mit einer gebogenen Greifverlängerung (11) versehen sind, die durch mehrere untereinander innen verbundene Rippen (13) ausgebildet wird, deren jeweilige freien Enden in Richtung des Endes gerichtet sind, das demjenigen entgegengesetzt ist, das durch die elastischen Streifen (10) eingenommen wird, die über einen relativ kurzen Abstand von der Kante der Montagebasis (1) nach außen hervorstehen, wobei die elastischen Streifen (10) und die gebogene Verlängerung (11) so dimensioniert sind, daß, wenn der Träger einmal am Innendach (3) befestigt ist, die entsprechenden Abschnitte der Kante des im Innendach (3) ausgebildeten passenden Loches (14) zwischen der Rückseite (I) der Montagebasis (1) und den Kanten (12) der Streifen (10) und zwischen der Rückseite (I) und dem freien Ende der gebogenen Verlängerung (11) gehalten werden, wodurch ein unsachgemäßes Lösen des Trägers verhindert wird.

5. Träger nach den Ansprüchen 1 und 4, dadurch gekennzeichnet, daß beim Durchgangsloch (14), das an dem Fahrzeuginnendach (3) angeordnet ist, der Abstand zwischen den Trägerrückhaltekanten im wesentlichen dem Abstand zwischen den unteren Enden der elastischen Streifen (10) und der Innenseite der gebogenen Verlängerung (11) des Trägers gleicht.

6. Träger nach Anspruch 1, dadurch gekennzeichnet, daß die Halteeinrichtung (MR) zwei zueinander identische elastische Streifen (15), aufweist, die senkrecht zur Rückseite (I) verlaufen, wobei die Streifen (15) in einer jeweiligen tangentiell benachbart zur Basis der Führungsverlängerung (2) liegenden Ebene, die einen kurzen Abstand von dieser aufweist, und davon getrennt angeordnet sind, und wobei die elastischen Streifen (15) an ihren unteren Enden mit jeweiligen Greifschlaufen (16) versehen sind, die zur Kante der Montagebasis (1) hin gerichtet sind, so daß, wenn der Träger einmal am Fahrzeuginnendach (3) befestigt ist, die entsprechenden Abschnitte des im Innendach (3) ausgebildeten passenden Loches (17) zwischen der Rückseite (I) der Montagebasis (1) und den Kanten (16) der Streifen (15) gehalten werden, wodurch ein unsachgemäßes Losen des Trägers verhindert wird.

7. Träger nach den Ansprüchen 1 und 6, dadurch gekennzeichnet, daß im Durchgangsloch (17), daß im Fahrzeuginnendach (3) angeordnet ist, der Abstand zwischen den Trägerhaltekanten im wesentlichen dem Abstand zwischen den unteren Enden der elastischen Trägerstreifen (15) gleicht.

8. Träger nach Anspruch 1, dadurch gekennzeichnet, daß die Rückhalteeinrichtung (MR) einen gebogenen Abteiler-artigen Absatz (18) aufweist, der sich senkrecht zur Rückseite (I) erstreckt und welcher in der Mitte teilweise die Trägerführungsverlängerung (2) umgebend angeordnet ist, wobei der gebogene Absatz (18) sich im Mittelabschnitt seines oberen Endes zu einem ziemlich großen Greifvorsprung (19) verlängert, dessen freies Ende in Richtung der entsprechenden Kante der Montagebasis (1) so ausgerichtet ist, daß, wenn der Träger einmal am Fahrzeuginnendach (3) befestigt ist, der entsprechende Abschnitt der Kante des im Innendach (3) ausgebildeten passenden Loches (20) zwischen der Rückseite (I) der Montagebasis (1) und dem Greifvorsprung (19) gehalten wird, wodurch ein unsachgemäßes Lösen des Trägers verhindert wird.

9. Träger nach den Ansprüchen 1 und 8, dadurch gekennzeichnet, daß das im Fahrzeuginnendach (3) angeordnete Durchgangsloch (20) eine Kontur aufweist, welche im wesentlichen dieselbe ist wie diejenige des gebogenen Absatzes (18) des Trägers und dadurch, daß es mit einer Nut (21), die so dimensioniert ist, daß sie mit dem Greifvorsprung (19) des gebogenen Absatzes (18) zusammenpaßt, und mit einem Positionierungsabsatz (22) versehen ist, der mit den Positionierungsrippen (n) der Montagebasis (1) zusammenpaßt.

## Revendications

1. Support de pare-soleil pour automobile, fabriqué de préférence en matière plastique, constitué par une embase (1) et une rallonge-guide (2) aménagée sur le côté (I) de l'embase (1) qui fait face au pavillon intérieur (3) du véhicule ou la face arrière, dans lequel support:-
- l'embase (1) possède un profil et une finition de surface qui s'harmonisent avec la finition de l'habitacle du véhicule et comprend un moyen d'ancrage (6) qui permet de la fixer à la structure du véhicule au travers du pavillon intérieur (3) superposé sur cette structure; et
- la rallonge-guide de support (2) est de préférence de forme sensiblement tronconique et comporte un trou traversant (4) dans le sens longitudinal, ladite rallonge-guide (2) occupant généralement une position centrée par rapport à l'embase (1) et une position légèrement inclinée par rapport à la normale à ladite embase (1), l'extrémité libre de la rallonge-guide (2), qui est de plus petit diamètre, étant équipée d'un moyen de maintien (5) pour l'axe-pivot recourbé d'un dispositif de fixation de pare-soleil;
qui se caractérise par le fait que:-
- le support est un organe en une seule pièce,
- sur la face arrière (I) de l'embase (1) se trouvent des nervures de positionnement (n) qui font saillie vers l'extérieur et qui sont en correspondance avec un trou traversant (9, 14, 17, 20) prévu à cet effet dans le pavillon intérieur (3) permettent de fixer audit pavillon intérieur (3) le support connecté à son pare-soleil approprié en position de fonctionnement, c'est-à-dire dans la position que le support doit occuper par rapport au pavillon principal formé par la structure du véhicule et il existe aussi sur la face arrière (I) un moyen de maintien (MR) différent du moyen d'ancrage (6) qui, en correspondance avec ledit trou traversant (9, 14, 17, 20) permet de fixer librement au pavillon intérieur (3) du véhicule le support connecté à son pare-soleil correspondant, sans qu'il soit nécessaire d'utiliser un quelconque outil ou de faire pénétrer l'axe-pivot dans la rallonge-guide (2), lesdites nervures de positionnement (n) et ledit moyen de maintien (MR) permettant l'engagement et la fixation du support connecté avec sont pare-soleil correspondant au pavillon intérieur (3) au cours du processus de fabrication de ce pavillon intérieur (3).

2. Support de la revendication 1,
caractérisé par le fait que le moyen de maintien (MR) comporte deux parties d'accrochage identiques en saillie (7) agencées perpendiculairement sur des extrémités opposées de ladite face arrière (I) à une distance relativement courte du bord de ladite face arrière (I), lesdites partie d'accrochage en saillie (7) étant équipées le long de leur côté extérieur d'une rainure transversale (8) respective qui s'étend depuis le niveau de ladite face arrière (I) sur une largeur et une profondeur fonction de l'épaisseur du pavillon intérieur (3) pour qu'après fixation dudit support au pavillon intérieur (3) les portions correspondantes du bord du trou (9) approprié formé dans ledit pavillon intérieur (3) se logent étroitement dans lesdites rainures (8) pour empêcher tout dégagement imprévu du support.

3. Support selon la revendication 1 et la revendication 2,
caractérisé par le fait que dans le trou traversant (9) formé dans le pavillon intérieur du véhicule (3) l'intervalle compris entre les bords de maintien du support est sensiblement égal à la distance comprise entre le fond des rainures (8) des parties d'accrochage en saillie (7) du support.

4. Support selon la revendication 1,
caractérisé par le fait qu'à une des extrémités de ladite face arrière (I), le moyen de maintien (MR) est constitué par deux bandes flexibles (10) identiques qui se font face et qui sont perpendiculaires audit côté (I), lesdites bandes étant équipées respectivement à leur extrémité supérieure des frisures d'accrochage (12) orientées vers le bord de l'embase (1) et centrée par rapport à ladite face arrière (I), une rallonge d'accrochage recourbée (11) formée par une pluralité de nervures connectées intérieurement (13) et dont l'extrémité libre respective s'oriente vers l'extrémité opposée à celle qui est occupée par lesdites bandes flexibles (10) qui font saillie sur une courte distance depuis le bord de l'embase (1), lesdites bandes flexibles (10) et les rallonges recourbées (11) ayant des dimensions appropriées pour qu'après fixation du support au pavillon intérieur (3) les portions correspondantes du bord du trou approprié (14) formé dans le pavillon intérieur (3) soient maintenues entre le bord arrière (I) de l'embase (1) et les bords (12) desdites bandes (10) et entre la face arrière (I) et l'extrémité libre de la rallonge recourbée (11) pour empêcher le dégagement imprévu du support.

5. Support selon la revendication 1 et la revendication 4,
caractérisé par le fait que dans le trou traversant (14) situé dans le pavillon intérieur (3) du véhicule l'intervalle entre les bords de maintien du support est sensiblement égal à la distance comprise entre les extrémités inférieures des bandes flexibles (10) et le côté intérieur de la rallonge recourbée (11).

6. Support selon la revendication 1,
caractérisé par le fait que le moyen de maintien (MR) est constitué par deux bandes flexibles (15) réciproquement identiques perpendiculaires à ladite face arrière (I), lesdites bandes flexibles (15) étant aménagées sur un plan respectif tangentiellement adjacent à la base de la rallonge-guide (2) à une courte distance de cette base-guide et qui les sépare, les bandes flexibles (15) comportant à leur extrémité supérieure des frisures d'accrochage (16) respectives orientées vers le bord de l'embase (1) pour qu'après fixation du support au pavillon intérieur (3) du véhicule les portions correspondantes du trou approprié (17) formé dans ledit pavillon intérieur (3) soient maintenues entre la face arrière (I) de l'embase (1) et les bords (16) desdites bandes flexibles (15) pour empêcher tout dégagement imprévu du support.

7. Support selon la revendication 1 et la revendication 6,
caractérisé par le fait que dans le trou traversant (17) situé dans le pavillon intérieur (3) du véhicule, l'espace compris entre les bords de maintien du support est sensiblement égal à la distance comprise entre les extrémités inférieures des bandes flexibles (15) du support.

8. Support selon la revendication 1,
caractérisé par le fait que le moyen de maintien (MR) est constitué par un épaulement incurvé en forme de cloison (18) qui fait saillie perpendiculairement par rapport à ladite face arrière (I) et qui est aménagé au centre pour entourer en partie la rallonge-guide (2) du support , ledit épaulement incurvé (18) faisant saillie à la portion centrale de l'extrémité supérieure de ladite rallonge-guide sous la forme d'une partie d'accrochage en saillie (19) d'assez grande dimension et dont l'extrémité libre est orientée vers le bord correspondant de l'embase (1) pour qu'après fixation du support au pavillon intérieur (3) du véhicule la portion correspondante du bord du trou approprié (20) formé dans le dit pavillon intérieur (3) soit maintenue entre la face arrière (I) de l'embase (1) et la partie d'accrochage en saillie (19) pour empêcher tout dégagement imprévu du support.

9. Support selon la revendication 1 et la revendication 8,
caractérisé par le fait que le trou traversant (20) situé dans le pavillon intérieur (3) du véhicule a un profil qui est sensiblement le même que celui de l'épaulement incurvé de support (18)
et par le fait qu'il comporte une encoche (21) de dimension étudiée pour que ladite encoche coïncide avec la partie d'accrochage en saillie (19) dudit épaulement incurvé (18) et un épaulement de positionnement (22) coïncidant avec les nervures de positionnement (n) de l'embase (1).
